# FASCICULE DE BREVET EUROPEEN

(11) **EP 4 366 158 B1**
(45) Date de publication et mention de la délivrance du brevet: **01.01.2025**
(21) Numéro de dépôt: 23204971.8
(22) Date de dépôt: 20.10.2023
(51) Int. Cl.: H02S 20/26, E04F 13/08

(54) **KIT D'HABILLAGE DE PAROIS PAR DES PANNEAUX PHOTOVOLTAIQUES**
BAUSATZ ZUM VERKLEIDEN VON WÄNDEN MIT PHOTOVOLTAISCHEN PANEELEN
KIT FOR COVERING WALLS WITH PHOTOVOLTAIC PANELS

(30) Priorité: 04.11.2022 FR 2211476
(43) Date de publication de la demande: 08.05.2024
(73) Titulaire: ULTRAWATT, 63118 Cébazat (FR)
(72) Inventeur: BATTUT, Jean-Charles, 63119 CHATEAUGAY (FR); VIGOUROUX, Jean-Christophe, 63100 CLERMONT-FERRAND (FR)
(74) Mandataire: Dennemeyer & Associates S.A.

(56) Documents cités:
- EP-A1- 2 645 013
- EP-A2- 1 724 842
- DE-U- 6 949 099
- GB-A- 2 457 742
- GB-A- 2 462 422
- US-A1- 2018 262 156
- US-B2- 8 898 969

## Description

L'invention a trait à un kit d'habillage de parois par des panneaux photovoltaïques. Ici le terme paroi désigne une paroi verticale ou inclinée par rapport à l'horizontale voire carrément horizontale, quelle que soit la nature de cette paroi, qu'elle soit en béton, parpaing, brique, bois, métal ou tout autre matériau. Une telle paroi peut être une partie structurelle d'un bâtiment qu'il soit à usage domestique, commercial, industriel ou autre. Ce peut également être une paroi isolée telle qu'un mur de clôture ou de séparation ou autre. Dans tous les cas, la paroi est située en extérieur. Par la suite, afin de faciliter la lecture, l'invention sera plus particulièrement décrite dans le cas d'une paroi extérieure constitutive d'une structure telle qu'un bâtiment. De telles parois sont fréquemment dénommées par le terme façade qui sera ici employé indifféremment en alternance avec le terme paroi.

Dans le domaine de la production d'énergie par des panneaux photovoltaïques, on connaît des dispositifs permettant d'équiper les toitures des bâtiments avec des panneaux photovoltaïques. Ces dispositifs sont généralement fixés sur les tuiles ou sur les éléments constitutifs du toit voire intégrés directement aux tuiles ou aux éléments constitutifs du toit. On connaît également des panneaux photovoltaïques équipant des supports dédiés à cet effet et situés dans des zones réservées à la production d'énergie solaire. De telles zones sont fréquemment dénommées par l'expression « ferme solaire ». On connaît également des dispositifs équipant des auvents de protection de parking extérieur ou de zones de stationnement. Dans tous les cas, ces panneaux photovoltaïques sont orientés globalement au sud afin d'optimiser la production d'énergie. De tels panneaux photovoltaïques sont inclinés selon l'inclinaison de leurs supports, toitures, auvents ou autres. Dans le cas de parois verticales telles que les façades des bâtiments, on connaît des panneaux photovoltaïques qui sont fixés sur les façades. On connait ainsi par EP-A-3 182 580 des panneaux photovoltaïques fixés sur une façade ventilée. EP-A-4 002 684 divulgue des panneaux photovoltaïques montés sur des mâts et couvrant au moins une partie d'une façade. WO-A-2011 016 777 concerne une structure montée sur une façade et destinée à supporter à la fois des panneaux photovoltaïques et un système de végétalisation de la façade. US-B-8 898 969 décrit un cadre support fixé sur un mur et supportant des cassettes préfabriquées. Les cassettes peuvent comprter des panneaux photovoltaïques. Les solutions connues comprennent des panneaux photovoltaïques qui sont fixés sur des structures porteuses solidaires des façades. De tels panneaux photovoltaïques sont fixés parallèlement au plan principal de la paroi verticale donc de facto en position verticale. Même si la paroi ainsi équipée est orientée au sud une orientation verticale des panneaux n'est pas optimale pour une captation maximale des rayons solaires. EP-A-2 645 013 a pour objet un système de support de panneaux photovoltaïques montés angulairement en rangées parallèles sur une paroi verticale. Des éléments sont placés angulairement entre les panneaux solaires et renvoient la lumière sur les panneaux de la rangée inférieure tout en supportant, par une extrémité, les panneaux de la rangée supérieure. Des panneaux décoratifs peuvent être placés de manière temporaire entre les panneaux. De tels panneaux photovoltaïques sont généralement fixés de façon définitive sur l'ensemble de la paroi ou de la structure porteuse ce qui ne facilite ni l'équipement de la paroi ou de la structure porteuse ni la maintenance, d'où des coûts élevés. En effet la mise en oeuvre des panneaux photovoltaïques de l'état de la technique sur une façade est plus coûteuse et plus longue en termes de manipulation et de main-d'oeuvre que pour par exemple équiper une toiture.

C'est à ces besoins que se propose de répondre l'invention en offrant un kit d'habillage de parois par des panneaux photovoltaïques aisé à mettre en place et à entretenir, modulaire et adaptable à toute paroi tout en optimisant la captation des rayons solaires.

A cet effet, l'invention a pour objet un kit d'habillage de paroi par des panneaux photovoltaïques comprenant au moins un panneau photovoltaïque, un support dudit panneau photovoltaïque, un moyen d'accrochage du panneau photovoltaïque sur le support, un moyen de fixation du support sur une paroi, le kit comprenant au moins deux éléments d'habillage de la paroi, un élément dénommé cassette dans lequel est inséré de manière définitive un panneau photovoltaïque, chaque élément d'habillage ou cassette est indépendant et pourvu d'un moyen d'accrochage amovible de l'élément d'habillage ou de la cassette sur le support et le plan principal du panneau photovoltaïque accroché sur le support est orienté angulairement par rapport au plan principal de la paroi sur laquelle le support est fixé, caractérisé en ce que l'angle d'inclinaison du panneau photovoltaïque est compris entre 2° et 15° et en ce que les éléments se présentent sous forme de polyèdres dont une face principale, dite face visible lorsque les éléments sont en place sur la paroi, est plane mais non parallèle par rapport au plan principal de la paroi et en ce que les faces principales visibles des éléments ne sont pas coplanaires mais sont disposées angulairement les unes par rapport aux autres.

Ainsi, grâce à l'invention on dispose d'un kit permettant d'habiller tout ou partie d'une paroi, quelle que soit les dimensions et/ou la nature de cette paroi. Le kit est aisé à transporter et à mettre en place. Il est possible d'enlever un ou plusieurs éléments sans avoir à démonter tous les éléments. De plus, le panneau photovoltaïque étant orienté angulairement par rapport à la paroi, on optimise, par cette inclinaison, l'orientation du panneau photovoltaïque par rapport aux rayons solaires, indépendamment de l'orientation de la paroi.

Selon des aspects avantageux mais non obligatoires de l'invention, un tel kit peut comprendre une ou plusieurs des caractéristiques suivantes :
l'angle d'inclinaison du panneau photovoltaïque par rapport à la paroi est fixe.

L'angle d'inclinaison du panneau photovoltaïque par rapport à la paroi est réglable.

La face visible d'au moins un élément d'habillage peut être remplacée par un panneau photovoltaïque.

Au moins un élément d'habillage peut comprendre au moins un organe choisi parmi un organe d'éclairage, un jet d'eau, un écran d'affichage, un hautparleur.

Le moyen d'accrochage de l'élément d'habillage et/ou de la cassette sur le support comprend au moins une découpe définissant un crochet de forme complémentaire à une patte solidaire du support.

La patte est mobile le long du support.

L'angle d'inclinaison fixe du panneau photovoltaïque par rapport à la paroi est défini par des bords de largeur non constante de la cassette et/ou de l'élément d'habillage.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig.1] est une vue en perspective d'une paroi partiellement équipée d'un kit selon un mode de réalisation de l'invention,
[Fig.2] est une vue en perspective similaire à la figure 1, à la même échelle d'une paroi équipée entièrement d'un kit conforme à l'invention,
[Fig.3] est une vue de face, à une autre échelle, d'une paroi entièrement équipée d'un kit conforme à un autre mode de réalisation de l'invention,
[Fig.4] est une vue en perspective, à une autre échelle, de la face arrière d'un élément ou cassette constitutif du kit selon un mode de réalisation de l'invention,
[Fig.5] est une vue en perspective, partielle, à une autre échelle et à partir d'un côté de la cassette de la figure 4 en place sur un support selon un mode de réalisation de l'invention,
[Fig.6] est une vue de face, à une autre échelle d'une paroi en cours d'équipement par le kit selon un mode de réalisation de l'invention, le support étant en place sur une paroi,
[Fig.7] est une vue partielle, et en perspective, à une plus grande échelle, de la mise en place sur le support de la cassette illustrée à la figure 4,
[Fig.8] est une vue en coupe, à une autre échelle de la paroi illustrée à la figure 2 et
[Fig.9] est une vue en perspective, partielle et à une autre échelle d'une cassette conforme à un autre mode de réalisation de l'invention.

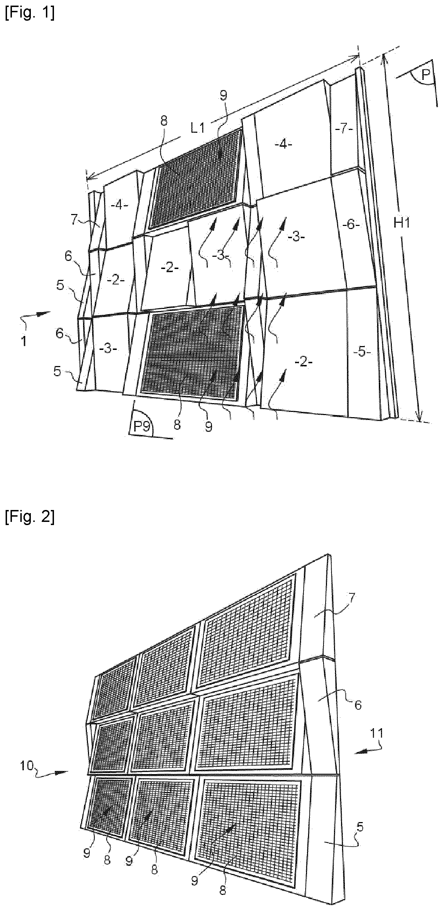

La figure 1 illustre une paroi ou une partie d'une paroi 1. Dans l'exemple il s'agit de la façade d'un bâtiment à usage commercial, industriel ou autre équipée d'au moins sur une partie d'un kit d'habillage de paroi par des panneaux photovoltaïques conforme à un mode de réalisation de l'invention. La paroi 1 peut être en tout matériau connu, par exemple du béton, de la pierre, du bois, du métal, des parpaings, des briques, un polymère, utilisé dans la construction d'un bâtiment ou d'une paroi isolée telle qu'un mur. Ici la paroi 1 comprend plusieurs éléments d'habillage 2 à 7. Ces éléments 2 à 7 sont réalisés en un ou des matériau(x) inerte(s) vis-à-vis de l'environnement et de la paroi et relativement léger(s). Ce(s) matériau(x) peu(ven)t être du métal, par exemple de l'aluminium, du cuivre, de l'inox, de l'acier thermo laqué, du zinc ou autre métal, du bois, des polymères, un composite ou tout autre matériau ou association de plusieurs matériaux. Les éléments 2 à 7 peuvent tous être dans un même matériau ou en des matériaux différents. Les éléments d'habillage 2 à 7, outre une fonction de protection de la paroi, cette dernière pouvant ainsi être brute donc non revêtue d'un enduit ou d'un organe de protection, ont également une fonction décorative.

Ces éléments 2 à 7 sont ici de formes et dimensions variées. Les éléments 2 à 7 se présentent sous forme de polyèdres dont la face principale visible est plane mais non parallèle par rapport au plan principal P de la paroi 1. Les faces principales visibles des éléments 2 à 7 ne sont pas coplanaires mais sont disposées angulairement les unes par rapport aux autres, cela de manière non régulière afin de réaliser un effet visuel esthétique. En variante représentative de l'état de la technique et ne faisant pas partie de l'invention, les faces des éléments 2 à 7 sont parallèles entre elles et/ou au plan P.

On note la présence sur la paroi 1 illustrée à la figure 1 de deux éléments ou cassettes 8 constitutifs d'un kit d'habillage de paroi par des panneaux photovoltaïques. Par la suite, pour faciliter la lecture le terme cassette sera majoritairement utilisé pour désigner ces éléments. Les cassettes 8 sont ici identiques au niveau forme et dimensions. Elles sont placées sensiblement en position centrale de la paroi 1 par rapport à sa longueur L1 et à sa hauteur H1. On conçoit qu'il s'agit là d'un choix répondant à un besoin esthétique global de la paroi 1. En variante, le nombre et/ou la position des cassettes 8 sur la paroi 1 sont différents. De même les cassettes 8 peuvent ne pas être toutes identiques au niveau de leurs formes et/ou dimensions, pa exemple pour s'adapter aux différents types de panneaux photovoltaïques existants lors de la mise en place du kit sur la façade. Dans tous les cas, les cassettes 8 comprennent un panneau photovoltaïque 9, connu en soi et intégré de manière définitive à la cassette 8.

Le plan principal P9 du panneau photovoltaïque 9 forme la face visible et active du panneau photovoltaïque 9 et de facto de la cassette 8. Pour mémoire, un panneau photovoltaïque 9 est constitué de cellules photovoltaïques composées de silicium. Ce matériau semi-conducteur a un comportement tel que lorsque le rayonnement solaire, donc des photons, viennent frapper les cellules photovoltaïques, cela induit un mouvement des électrons du matériau ce qui produit un courant électrique continu. Le courant continu produit est transformé en courant alternatif par des micro-transformateurs, généralement situés à l'arrière du panneau photovoltaïque 9. Avantageusement, dans l'invention, les autres composants électriques et électroniques assurant la gestion du panneau photovoltaïque 9 et le transport de l'électricité sont placés dans le volume interne de la cassette 8 recevant ledit panneau 9. De la sorte, on obtient une cassette 8 indépendante et autonome en ce qui concerne non seulement la production d'électricité mais également en ce qui concerne les équipements périphériques nécessaires au transport et à la gestion du courant alternatif produit par le panneau photovoltaïque 9, cela avec un encombrement total correspondant sensiblement à celui, nominal, de la cassette 8 seule. Chaque cassette 8 définit, avec le panneau photovoltaïque 9 intégré à la cassette 8 une unité autonome de production d'électricité.

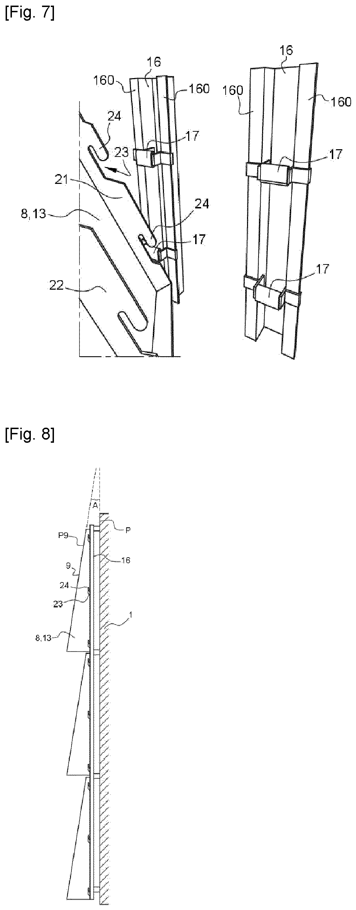

Les faces visibles, donc les panneaux photovoltaïques 9 de toutes les cassettes 8, sont disposées angulairement par rapport au plan principal P de la paroi 1. L'angle A, référencé à la figure 8, formé entre les plans P9 des panneaux photovoltaïques et le plan P de la paroi 1 est au moins de 2° et au maximum de 15°, il est généralement compris entre 2° et 8°. Il est à noter que l'angle A peut être identique ou non à un angle formé entre la face visible d'au moins un des éléments d'habillage 2 à 7 et le plan P de la paroi 1, lorsque cette face d'un élément 2 à 7 est inclinée.

Ainsi lorsque la paroi 1 est orientée globalement au sud, c'est-à-dire entre le sud-est et le sud-ouest, pour capter le maximum de luminosité et de rayons solaires le long d'une journée, une telle orientation angulaire du panneau photovoltaïque 9 dans chaque cassette 8 optimise la captation de photons frappant chaque panneau photovoltaïque 9 cela sur une période la plus longue possible dans une journée, pour autant que le soleil ou du moins la luminosité soit maximale.

La figure 2 illustre une paroi 10 similaire à celle de la figure 1 mais dans laquelle les éléments d'habillage se limitent à des éléments 5, 6, 7, identiques à ceux illustrés à la figure 1 et situés sur les bords 11 de la paroi 10 définissant la hauteur de la paroi 10. En variante, les éléments d'habillage sont soit absents soit différents de ceux de la figure 1. Le reste de la paroi 10 est occupé par des panneaux photovoltaïques 9 insérés dans des cassettes 8. Ici, les cassettes 8 et les panneaux 9 sont tous identiques et disposés en rangées parallèles. Par ailleurs, afin de simplifier la lecture, les cassettes 8 et panneaux photovoltaïques 9 illustrés aux figures 1 et 2 sont identiques. On conçoit que, en alternative, ils sont différents. En d'autres termes en enlevant les éléments d'habillage 2 à 5 représentés à la figure 1 et en les remplaçant par des cassettes 8 conformes à un mode de réalisation de l'invention, on passe ainsi d'une paroi 1 telle qu'illustré la figure 1 à une paroi 10 telle qu'illustrée à la figure 2. Grâce à l'invention, il est aisé de moduler la quantité de cassettes 8 et/ou leurs dispositions sur une paroi 1 ou 10 en fonction des souhaits du propriétaire du bâtiment, cela pour des raisons par exemple esthétiques et/ou pour augmenter ou diminuer la production d'énergie en jouant ainsi sur le nombre de panneaux photovoltaïques 9 et la surface de la paroi couverte par des cassettes 8. L'invention permet donc, de manière aisée et simple, de faire évoluer non seulement l'aspect esthétique d'une paroi dans le temps mais également d'adapter la production d'énergie.

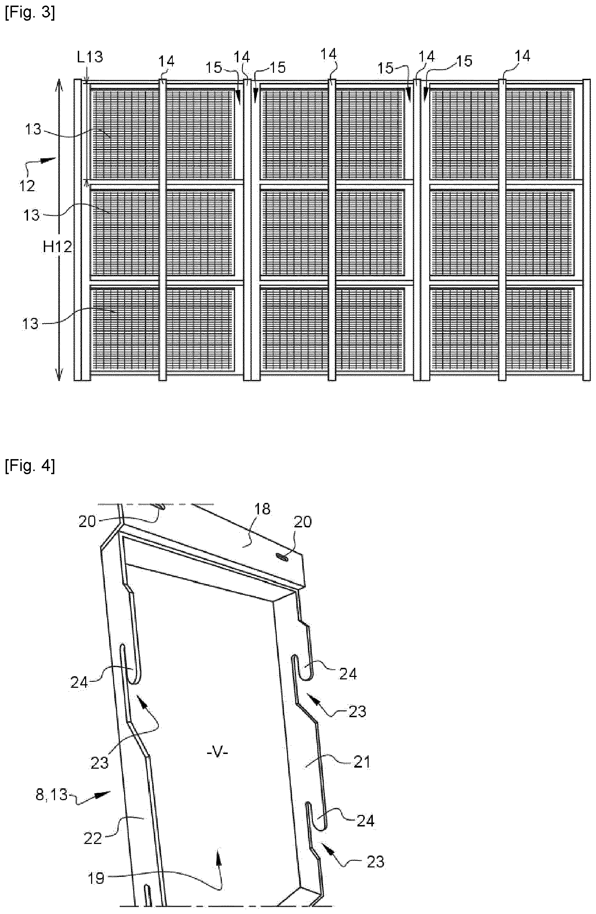

La figure 3 illustre un autre mode de réalisation de l'invention dans lequel une paroi 12 est entièrement couverte sur sa surface par des cassettes 13 conformes à l'invention, disposées en rangées parallèles. Ici l'orientation et/ou les dimensions des cassettes 13, également de forme rectangulaire comme celles 8 illustrées aux figures 1 et 2 sont différentes, les cassettes 13 étant orientées avec leur longueur L13 parallèle à la hauteur H12 de la paroi 12. Ici, en vue de face, on note que des renforts 14 sont placés régulièrement, parallèlement à la hauteur H12 de la paroi 12. Avantageusement, les renforts 14 font partis du support permettant de fixer les cassettes 13 à la paroi 12. les renforts 14 sont ici configurés en barres métalliques. Des espaces 15, à savoir des joints creux, à but fonctionnel et/ou esthétique, sont régulièrement ménagés entre les cassettes 13, de part et d'autre de certains des renforts 14. On donne ainsi un aspect en damier à la paroi 12, cela tout en ayant une production d'énergie optimale par rapport à la surface disponible sur la paroi 12.

A titre d'exemple, une cassette 8 ou 13 dont le panneau photovoltaïque 9 fait 110 cm par 175 cm fournit en sortie une puissance de 400 W, soit un rendement d'environ 20 %. En d'autres termes, une paroi 1, 10 ou 12 ayant une longueur de 10 m sur une hauteur de 4 m entièrement équipée de cassettes 8 ou 13 permet de fournir, sur une période de 8h d'ensoleillement entre 2000 W et 5000 W.

Dans un autre mode de réalisation de l'invention, les éléments d'habillage 2 à 7 peuvent être peints et/ou de nature différente et/ou avec des surfaces visibles non lisses et/ou planes. Dans tous les cas le nombre et/ou la disposition des cassettes 8, 13 donc de facto des panneaux photovoltaïques 9, optimisent l'habillage de la paroi 1, 10, 12 et la production d'énergie.

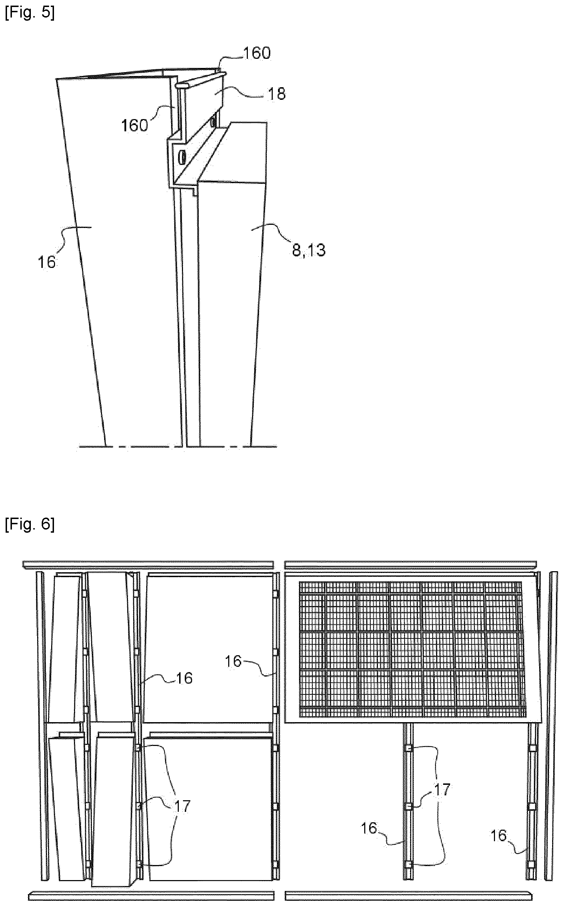

La figure 4 illustre un mode de réalisation avantageux d'un moyen d'accrochage des cassettes 8 ou 13 sur des supports 16, visibles aux figures 6 à 9. Les supports 16 sont solidaires de la paroi 1, 10, 12. Ils sont en un matériau léger, résistant à la corrosion et inerte vis-à-vis de la paroi 1, 10, 12 et de la cassette 8, 13. Avantageusement, ils sont en acier galvanisé, en acier inoxydable, en aluminium, en polymère, en matériau composite. Les supports 16 sont ici des rails ou barres profilées à section transversale en oméga à fond plat. Des pattes plates, particulièrement visibles à la figure 7, sont montées perpendiculairement à la plus grande dimension du support 16 et de manière à être mobile en translation le long du support 16. Ces pattes 17 définissent ainsi des organes d'accrochage réglables des cassettes 8 ou 13 sur les supports 16.

Comme cela ressort de la figure 4, la face arrière de la cassette 8, 13 est ouverte de manière à définir un volume V permettant l'insertion des câbles et gaines techniques reliés aux panneaux photovoltaïques 9 ainsi que d'autres éléments tels que des modules de commande et/ou de gestion de la production électrique par les panneaux 9 montés sur la cassette 8, 13. Avantageusement, chaque cassette 8, 13 est équipée de son propre moyen de raccordement au réseau domestique ou public. En partie haute de la cassette 8, 13, en regardant la figure 4, le bord 18 de la cassette est configuré en L, une des branches du L s'étendant vers l'extérieur de la cassette 8, 13 à partir de la face arrière ouverte 19 de la cassette 8, 13. Le bord 18 est pourvu d'orifices 20 permettant le passage de moyens de fixation, avantageusement de manière non définitive, de la cassette 8, 13 sur le support 16. Comme moyen de fixation, on peut citer par exemple des boulons, vis, goujons ou autres. Il est ainsi possible d'accrocher, de façon non définitive, la cassette 8 ou 13 et de la sécuriser en appui sur le support 16 qui est lui solidaire de la paroi 1, 10, 12.

Sur chacun de deux bords parallèles 21, 22 de la cassette 8 ou 13, par exemple ceux définissant les grands côtés de cette dernière en référence à la figure 4, sont ménagées au moins une découpe 23. En l'espèce, chaque bord 21, 22 comprend deux découpes 23 identiques réparties sur la longueur du bord. En variante, le nombre et/ou la forme des découpes sont différents, de même les découpes peuvent être non identiques sur chaque bord ou entre les bords.

Chaque découpe 23 est globalement en forme de L avec un angle ouvert supérieur à 90°entre la petite et la grande branche du L. Les découpes 23 sont réalisées de sorte que la plus grande branche du L est parallèle à la longueur du bord 21, 22 ce qui permet de définir une patte 24. Cette patte 24 forme un crochet permettant l'accrochage de la cassette 8, 13 sur un élément de forme complémentaire c'est-à-dire de dimensions et de formes adaptées pour être inséré aisément dans l'encoche du crochet 24 et retenu par ce dernier. Ici deux crochets 24, identiques, sont réalisés sur chaque bord 21, 22. Il est ainsi possible soit de fixer à différentes hauteurs sur un support 16 la cassette 8, 13 soit de la fixer sur deux supports différents parallèles. En variante le nombre et/ou la disposition des crochets 24 sont différents, sachant que dans tous les cas avec un tel système un utilisateur prend la cassette 8, 13 et la fixe de manière aisée sur un support 16 qui lui a été préalablement solidarisé à la paroi 1, 10 ou 12.

La figure 5 illustre ainsi la cassette 8, 13 en place et solidarisée sur une partie du support 16, à savoir avec le bord 18 fixé, par exemple par vissage, boulonnage ou autre, sur les parties latérales 160 du support 16, alors qu'au moins un des crochets 24 est en prise avec au moins une des pattes 17, cette dernière étant positionnée à la hauteur voulue sur le support 16. En variante, les pattes 17 sont revêtues d'un matériau souple permettant un blocage par coincement du crochet 24 de la cassette 8, 13 sur la patte 17, évitant ainsi tout mouvement de la cassette 8, 13 en place sur le support 16, cela indépendamment de la solidarisation de la cassette 8, 13 par fixation de la patte 18 sur le support 16.

La figure 7 illustre la mise en place d'une cassette 8, 13 sur deux supports 16 parallèles, les divers éléments étant partiellement illustrés. Les pattes 17 de chaque support 16 ont été au préalable positionnées à la hauteur voulue, cela par translation des pattes 17 le long du support 16. la mise en place de la cassette 8, 13 s'effectue en présentant les crochets 24 en regard des pattes 17 puis, sans outil, en insérant les pattes 24 dans les découpes 23, les crochets 24 passant derrière les pattes 17. Il est ainsi aisé pour une personne seule d'accrocher une ou plusieurs cassettes 8, 13 dans un temps court, sur les supports 16. De plus, comme cela apparait en particulier à la figure 6, le nombre d'éléments constitutifs du support 16 est en nombre réduit pour équiper une paroi puisque il n'est besoin que de supports 16 verticaux régulièrement espacés, selon la largeur de la cassette 8, 13. Avantageusement, les supports ou rails 16 sont équipés d'origine d'un nombre défini de pattes 17, étant entendu que l'utilisateur peut si besoin en enlever ou en ajouter. De la sorte, la mise en place du support est rapide et simple, cela tout en ayant un support peu encombrant et léger qui ne modifie pas les caractéristiques structurelles de la paroi. On conçoit aisément que les moyens d'accrochage des éléments d'habillage 2 à 7 sont configurés de manière tout à fait similaire à ceux d'une cassette 8, 13 donc que des crochets 24 équipent également les éléments 2 à 7. L'utilisateur peut de la sorte équiper aisément et rapidement, à tout moment, une paroi 1, 10, 12 indifféremment avec une cassette 8, 13 ou un élément d'habillage 2 à 7 et changer une cassette 8, 13 pour un élément 2 à 7 ou inversement.

Avantageusement, afin de limiter le nombre de pièces à produire, au moins un élément d'habillage 2 à 7 est une cassette 8 ou 13 dépourvue de panneau photovoltaïque 9, ce dernier étant remplacé par une surface correspondant à l'effet visuel voulu.

Lorsque les angles d'inclinaison des faces visibles des éléments d'habillage 2 à 7 et/ou des panneaux photovoltaïques 9 sont identiques, avec une inclinaison orientée dans le même sens, disposés en rangées et tous étant pourvus du même moyen d'accrochage sur le support 16, on obtient une paroi 1, 10, 12 dont le profil, en coupe, est visible à la figure 8. Comme on le note le plan principal P9 de la cassette 8, 13 donc la surface active du panneau photovoltaïque 9 ou le plan P25 de la face visible 25 de l'élément d'habillage 2 à 7 est orientée angulairement par rapport au plan principal P de la paroi 1, 10, 12 avec un angle compris entre 2° et 15°. La pointe du triangle formé par la cassette 8, 13 ou l'élément d'habillage 2 à 7 et le plan P de la paroi 1, 10, 12 est orienté vers le haut de cette paroi 1, 10, 12 en regardant la figure 7. En variante, l'inclinaison de la cassette est effectuée dans un autre sens, vertical ou horizontal. On note que chaque cassette 8, 13 ou élément 2 à 7 est au voisinage d'au moins une autre cassette 8, 13 ou élément 2 à 7 mais de manière non solidaire. On peut ainsi changer une ou plusieurs cassettes 8,13 et/ou élément 2 à 7. Une telle configuration permet également si besoin d'insérer un matériau isolant, thermique et/ou acoustique, à partir de la face arrière 19 de la cassette 8, 13 ou de l'élément 2 à 7 et/ou au niveau du support 16 entre les montants de ce dernier.

La figure 8 illustre également le fait que les bords 21, 22 des cassettes 8, 13 et les bords des éléments d'habillage 2 à 7 ne sont pas à largeur constante mais en forme de triangle. C'est cette configuration qui assure l'inclinaison du panneau photovoltaïque 9 et de la face visible 25 des éléments 2 à 7. Ainsi, lors de la fabrication, l'angle A est défini et constant pour tous les éléments 2 à 7 et cassette 8, 13. En variante, l'angle est différent entre les cassettes 8, 13 et les éléments 2 à 7. Dans un autre mode de réalisation, l'angle d'inclinaison est variable, l'utilisateur pouvant régler indépendamment l'angle de chaque cassette 8, 13 et/ou élément 2 à 7. Pour cela, un moyen connu en soi d'inclinaison équipe l'arrière du panneau photovoltaïque 9 et/ou de la face 25. Il peut s'agir, par exemple, de vérins, de crémaillère, d'un compas ou autre. Une telle solution permet d'adapter précisément l'inclinaison à la position de la paroi et à l'ensoleillement reçu.

Il est également possible d'équiper au moins une cassette 8, 13 ou un élément d'habillage 2 à 7 et/ou le support 16 avec des organes d'éclairage ou d'autres organes tels que des jets d'eau, des écrans d'affichage, des hauts parleurs, des décorations peintes ou autres. Dans tous les cas la configuration en creux ouvert de chaque cassette 8, 13 permet de ménager une circulation d'air à l'arrière de la cassette ce qui permet de ventiler et refroidir le panneau photovoltaïque 9.

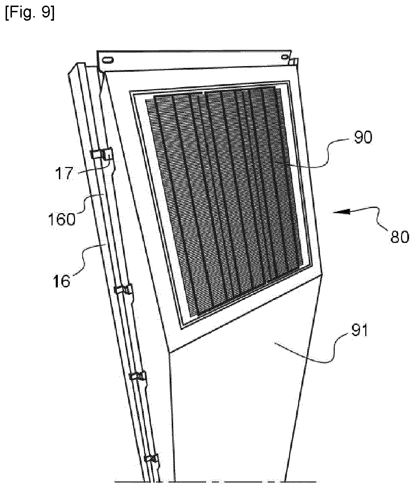

La figure 9 illustre un autre mode de réalisation de l'invention dans laquelle une cassette 80 est globalement de forme pyramidale à base rectangulaire avec une face 90 incorporant le panneau photovoltaïque, l'autre face 91 étant à but esthétique. Ici, la face 91 est plane. En variante, elle comprend des reliefs et/ou des couleurs et/ou comporter un autre élément tel que par exemple un écran d'affichage, un éclairage, un haut-parleur, des jets d'eau ou autres. En d'autres termes seule une partie de la cassette 80 est dans ce cas dédiée à la production d'énergie par un panneau photovoltaïque 90. On conçoit que, si besoin, la casette 80 peut être équipée, temporairement ou définitivement d'un autre panneau photovoltaïque sur sa face 91, étant entendu que l'inclinaison étant différente, ce second panneau photovoltaïque aura un rendement différent.

En variante, l'accrochage des cassettes 8, 13, 90 et/ou des éléments d'habillage 2 à 7 s'effectue par une liaison magnétique avec le support ou par un autre moyen tel qu'un système de tenon/mortaise, de clips ou autre.

Selon un mode de réalisation, le kit comprend plusieurs éléments d'habillage et cassettes selon plusieurs dimensions, correspondant à trois entraxes entre les rails constitutifs du support 16, par exemple des entraxes de 20 cm, 30 cm et 100 cm ce qui permet d'habiller toutes longueurs et hauteurs de parois. On conçoit que le nombre d'éléments d'habillage et/ou de cassettes composant un kit est modifiable selon les besoins.

## Revendications

1. Kit d'habillage de paroi (1 ; 10 ; 12) par des panneaux photovoltaïques (9 ; 90) comprenant au moins un panneau photovoltaïque (9 ; 90), un support (16) dudit panneau photovoltaïque (9 ; 90), un moyen d'accrochage (23, 24) du panneau photovoltaïque (9 ; 90) sur le support (16), un moyen de fixation du support (16) sur une paroi (1 ; 10 ; 12), le kit comprenant au moins deux éléments d'habillage (2 à 7 ; 91) de la paroi (1 ; 10 ; 12), un élément dénommé cassette (8 ; 80 ; 13) dans lequel est inséré de manière définitive un panneau photovoltaïque (9 ; 90), chaque élément d'habillage (2 à 7 ; 91) ou cassette (8 ; 80 ; 13) est indépendant et pourvu d'un moyen d'accrochage (23, 24) amovible de l'élément d'habillage (2 à 7 ; 91) ou de la cassette (8 ; 80 ; 13) sur le support (16), **caractérisé en ce que** le plan principal (P9) du panneau photovoltaïque (9 ; 90) accroché sur le support (16) est orienté angulairement (A) par rapport au plan principal (P) de la paroi (1 ; 10 ; 12) sur laquelle le support (16) est fixé, l'angle d'inclinaison (A) du panneau photovoltaïque (9 ; 90) étant est compris entre 2° et 15° et **en ce que** les éléments d'habillage (2 à 7) se présentent sous forme de polyèdres dont une face principale, dite face visible lorsque les éléments d'habillage (2 à 7 ; 91) sont en place sur la paroi (1 ; 10 ; 12), est plane mais non parallèle par rapport au plan principal (P) de la paroi (1) et **en ce que** les faces principales visibles des éléments d'habillage (2 à 7) ne sont pas coplanaires mais sont disposées angulairement les unes par rapport aux autres.

2. Kit selon la revendication 1, **caractérisé en ce que** l'angle d'inclinaison (A) du panneau photovoltaïque (9 ; 90) par rapport à la paroi (1 ; 10 ; 12) est fixe.

3. Kit selon la revendication 1, **caractérisé en ce que** l'angle d'inclinaison (A) du panneau photovoltaïque (9 ; 90) par rapport à la paroi (1 ; 10 ; 12) est réglable.

4. Kit. selon la revendication 1, **caractérisé en ce que** la face visible (25) d'au moins un élément d'habillage (2 à 7 ; 91) peut être remplacée par un panneau photovoltaïque (9 ; 90).

5. Kit selon la revendication 1, **caractérisé en ce qu'**au moins un élément d'habillage (2 à 7 ; 91) peut comprendre au moins un organe choisi parmi un organe d'éclairage, un jet d'eau, un écran d'affichage, un hautparleur.

6. Kit selon la revendication 1, **caractérisé en ce que** le moyen d'accrochage (23, 24) de l'élément d'habillage (2 à 7 ; 91) et/ou de la cassette (8 ; 80 ; 13) sur le support (16) comprend au moins une découpe (23) définissant un crochet (24) de forme complémentaire à une patte (17) solidaire du support (16).

7. Kit selon la revendication 6, **caractérisé en ce que** la patte (17) est mobile le long du support (16).

8. Kit selon la revendication 2, **caractérisé en ce que** l'angle d'inclinaison (A) fixe du panneau photovoltaïque (9 ; 90) par rapport à la paroi (1 ; 10 ; 12) est défini par des bords (21, 22) de largeur non constante de la cassette (8 ; 80 ; 13) et de l'élément d'habillage (2 à 7 ; 91). 1

## Patentansprüche

1. Kit zur Verkleidung einer Wand (1; 10; 12) mit Photovoltaikpaneelen (9; 90), umfassend mindestens ein Photovoltaikpaneel (9; 90), einen Träger (16) für das Photovoltaikpaneel (9; 90), ein Aufhängemittel (23; 24) für das Photovoltaikpaneel (9; 90) auf dem Träger (16), ein Befestigungsmittel für den Träger (16) an einer Wand (1; 10; 12), wobei das Kit mindestens zwei Verkleidungselemente (2 bis 7; 91) der Wand (1; 10; 12) umfasst, ein Element, das als Kassette (8; 80; 13) bezeichnet wird, in die ein Photovoltaikpaneel (9; 90) endgültig eingesetzt wird, wobei jedes Verkleidungselement (2 bis 7; 91) oder jede Kassette (8; 80; 13) unabhängig ist und mit einem Aufhängemittel (23, 24) versehen ist, das von dem Verkleidungselement (2 bis 7; 91) oder der Kassette (8; 80; 13) auf dem Träger (16) abnehmbar ist, **dadurch gekennzeichnet, dass** die Hauptebene (P9) des an dem Träger (16) aufgehängten Photovoltaikpaneels (9; 90) in Bezug auf die Hauptebene (P) der Wand (1; 10; 12), an welcher der Träger (16) befestigt ist, winkelig (A) ausgerichtet ist, wobei der Neigungswinkel (A) des Photovoltaikpaneels (9; 90) zwischen 2° und 15° liegt, und dadurch, dass die Verkleidungselemente (2 bis 7) in Form von Polyedern vorliegen, von denen eine Hauptseite, die als sichtbare Seite bezeichnet wird, wenn die Verkleidungselemente (2 bis 7; 91) auf der Wand (1; 10; 12) angeordnet sind, eben, aber nicht parallel in Bezug auf die Hauptebene (P) der Wand (1) ist, und dadurch, dass die sichtbaren Hauptseiten der Verkleidungselemente (2 bis 7) nicht koplanar sind, sondern winkelig in Bezug zueinander angeordnet sind.

2. Kit nach Anspruch 1, **dadurch gekennzeichnet, dass** der Neigungswinkel (A) des Photovoltaikpaneels (9; 90) in Bezug auf die Wand (1; 10; 12) fest ist.

3. Kit nach Anspruch 1, **dadurch gekennzeichnet, dass** der Neigungswinkel (A) des Photovoltaikpaneels (9; 90) in Bezug auf die Wand (1; 10; 12) einstellbar ist.

4. Kit nach Anspruch 1, **dadurch gekennzeichnet**, **dadurch gekennzeichnet, dass** die sichtbare Seite (25) von mindestens einem Verkleidungselement (2 bis 7; 91) durch eine Photovoltaikplatte (9; 90) ersetzt werden kann.

5. Kit nach Anspruch 1, **dadurch gekennzeichnet, dass** mindestens ein Verkleidungselement (2 bis 7; 91) mindestens ein Organ umfassen kann, das aus einem Beleuchtungsorgan, einem Wasserstrahl, einem Anzeigeschirm, einem Lautsprecher ausgewählt ist.

6. Kit nach Anspruch 1, **dadurch gekennzeichnet, dass** das Aufhängemittel (23, 24) des Verkleidungselements (2 bis 7; 91) und/oder der Kassette (8; 80; 13) auf dem Träger (16) mindestens einen Ausschnitt (23) umfasst, der einen Haken (24) definiert, dessen Form komplementär zu einem Fuß (17) ist, der fest mit dem Träger (16) verbunden ist.

7. Kit nach Anspruch 6, **dadurch gekennzeichnet, dass** der Fuß (17) entlang des Trägers (16) beweglich ist.

8. Kit nach Anspruch 2, **dadurch gekennzeichnet, dass** der feste Neigungswinkel (A) des Photovoltaikpaneels (9; 90) in Bezug auf die Wand (1; 10; 12) durch Kanten (21; 22) mit nicht konstanter Breite der Kassette (8; 80; 13) und des Verkleidungselements (2 bis 7; 91) definiert ist.

## Claims

1. Kit for cladding a wall (1; 10; 12) with solar panels (9; 90) comprising at least one solar panel (9; 90), a support (16) for said solar panel (9; 90), a means of attachment (23, 24) of the solar panel (9; 90) onto the support (16), a means of fastening the support (16) onto the wall (1; 10; 12), the kit comprising at least two elements of cladding (2 to 7; 91) for the wall (1; 10; 12), an element called cassette (8; 80; 13) in which a solar panel is permanently inserted (9; 90), each element of cladding (2 to 7; 91) or cassette (8; 80; 13) being independent and provided with means of attachment (23, 24) removable from the element of cladding (2 to 7; 91 ) or from the cassette (8; 80; 13) on the support (16), **characterized in that** the principal plane (P9) of the solar panel (9; 90) attached onto the support (16) is oriented angularly (A) with respect to the principal plane (P) of the wall (1; 10; 12) on which the support (16) is fastened, the angle of inclination (A) of the solar panel (9; 90) being between 2° and 15° and **in that** the elements of cladding (2 to 7) are in the form of polyhedrons including a principal face, said face visible when the elements of cladding (2 to 7; 91) are in place on the wall (1; 10; 12), being flat but not parallel with respect to the principal plane (P) of the wall (1) and **in that** the principal visible faces of the elements of cladding (2 to 7) are not co-planar but are arranged angularly with respect to each other.

2. Kit according to claim 1, **characterized in that** the angle of inclination (A) of the solar panel (9; 90) with respect to the wall (1; 10; 12) is fixed.

3. Kit according to claim 1, **characterized in that** the angle of inclination (A) of the solar panel (9; 90) with respect to the wall (1; 10; 12) is adjustable.

4. Kit according to claim 1, **characterized in that** the visible face (25) of at least one element of cladding (2 7; 91) can be replaced by a solar panel (9; 90).

5. Kit according to claim 1, **characterized in that** at least one element of cladding (2 to 7; 91) can comprise at least one member chosen from amongst a lighting element, a water jet, a display screen, a loudspeaker.

6. Kit according to claim 1, **characterized in that** the means of attachment (23, 24) of the element of cladding (2 to 7; 91) and/or the cassette (8; 80; 13) on the support (16) comprises at least one cut-out (23) defining a hook (24) in the form complementary to a lug (17) solidly attached to the support (16).

7. Kit according to claim 6, **characterized in that** the lug (17) is mobile with respect to the support (16).

8. Kit according to claim 2, **characterized in that** the fixed angle of inclination (A) of the solar panel (9; 90) with respect to the wall (1; 10; 12) is defined by the edges (21, 22) of non-constant width of the cassette (8; 80; 13) and of the element of cladding (2 to 7; 91).
